**Europäisches Patentamt**

**European Patent Office**

**Office européen des brevets**

(11) Veröffentlichungsnummer: **0 045 767**
**B1**

(12) **EUROPÄISCHE PATENTSCHRIFT**

(45) Veröffentlichungstag der Patentschrift:
**23.01.85**

(51) Int. Cl.⁴: **F 16 B 5/07,** F 16 B 2/00,
F 16 B 13/02, F 16 L 37/00

(21) Anmeldenummer: **81900454.0**

(22) Anmeldetag: **12.02.81**

(86) Internationale Anmeldenummer:
**PCT/AT 81/00002**

(87) Internationale Veröffentlichungsnummer:
**WO 81/02332 (20.08.81 Gazette 81/20)**

(54) **EINRICHTUNG ZUR LÖSBAREN VERBINDUNG ZWEIER TEILE.**

(30) Priorität: **12.02.80 AT 749/80**

(43) Veröffentlichungstag der Anmeldung:
**17.02.82 Patentblatt 82/7**

(45) Bekanntmachung des Hinweises auf die Patenterteilung:
**23.01.85 Patentblatt 85/4**

(84) Benannte Vertragsstaaten:
**CH DE FR GB LI NL SE**

(56) Entgegenhaltungen:
**DE - A - 1 784 067**
**DE - A - 2 534 582**
**DE - B - 1 945 377**
**FR - A - 781 462**
**FR - A - 1 168 666**
**FR - A - 2 213 692**
**GB - A - 1 196 655**
**GB - A - 1 408 493**
**US - A - 1 917 992**
**US - A - 3 913 928**
**US - A - 4 054 337**

(73) Patentinhaber: **ASTL, Franz, Kinkstrasse 8,
A-6330 kufstein (AT)**

(72) Erfinder: **ASTL, Franz, Kinkstrasse 8, A-6330 kufstein
(AT)**

(74) Vertreter: **Büchel, Kurt F., Dr., Austrasse 4,
FL-9490 Vaduz (LI)**

BUNDESDRUCKEREI BERLIN

## Beschreibung

Die Erfindung betrifft eine Einrichtung zur lösbaren Verbindung zweier Teile, von denen einer eine Ausnehmung, Höhlung od. dgl. und der andere ein in die Ausnehmung, Höhlung od. dgl. einschiebbares oder darin bewegbares Gegenstück aufweist.

Es ist beispielsweise aus der DE-A-1 945 377 ein dübelähnlicher Steckbolzen bekannt, der über seinen Umfang verteilt eine Vielzahl von Zähnen aufweist, die radial oder zum Kopf des Befestigungselementes hin geneigt aus der Mantelfläche vorstehen. Die korrespondierende Bohrung weist eine glatte Wandung auf. Das Befestigungselement wird in die Bohrung eingeschlagen, wobei sich die Zähne an die Wandung der Bohrung anlegen und bei Zugeinwirkung daran verspreizen. Die dadurch erzielbare Verbindung ist als unlösbare Verbindung gedacht. Aus der US-A-3 913 928 ist eine lösbare Rohrverbindung bekannt, wobei zur Herstellung der Verbindung ein am Umfang mit elastischen Rippen versehener Teil mit den Rohren zusammenwirkt.

Die Erfindung hat es sich zur Aufgabe gestellt, eine Einrichtung zu schaffen, die beim Verschieben zweier Teile eine Verbindung bildet, die der Rückbewegung der beiden Teile einen hohen Widerstand entgegensetzt, jedoch bei dessen Überwindung zu keiner Beschädigung der Einrichtung führt, so daß die Verbindung lösbar und wiederherstellbar ist.

Erfindungsgemäß wird diese Aufgabe dadurch gelöst, daß im wesentlichen senkrecht zur Bewegungsrichtung sich erstreckende elastische Elemente an zumindest einem Teil einer der parallel zur Bewegungsrichtung verlaufenden Flächen der Ausnehmung, Höhlung od. dgl. bzw. des Gegenstückes angeordnet sind, und daß jede ebenfalls parallel zur Bewegungsrichtung verlaufende Gegenfläche des Gegenstückes bzw. der Ausnehmung, Höhlung od. dgl. uneben ausgebildet ist, wobei die elastischen Elemente als eine Lage von nahe nebeneinander angeordneten Borsten od. dgl. ausgebildet sind, und deren Länge zumindest größer als der Abstand zwischen der mit den elastischen Elementen versehenen Fläche und der Berührungsfläche der Erhebungen an der unebenen Gegenfläche ist.

Die erfindungsgemäße Einrichtung ist für jede beliebige Verbindung zwischen zwei Teilen anwendbar. Die beiden Teile können voneinander vollständig trennbar sein, beispielsweise indem zwischen ihnen Steckverbindungen vorgesehen sind. Die beiden können andererseits aber auch nicht vollständig trennbar sein, so daß zwischen ihnen eine beidseitig begrenzte Schiebe- oder Drehbewegung ausführbar ist. Die als elastische Elemente vorgesehenen Borsten od. dgl. können aus jedem geeigneten Material bestehen und verschiedene Eigenschaften aufweisen. Beides richtet sich nach der Art der zu verbindenden Teile, nach der Festigkeit der herzustellenden Verbindung. Es bleibt dem Fachmann überlassen, für den jeweiligen Anwendungszweck der Verbindung die geeigneten Kriterien für die Borsten auszuwählen. Hierzu zählen neben der Materialauswahl die Bestimmung der Elastizität, die Anzahl der Borsten pro Flächeneinheit, die Größe der zu belegenden Fläche, die Art und Größe der Unebenheiten der Gegenfläche usw.

Bei der Zusammenfügung zweier völlig voneinander getrennter Teile, etwa bei einer Steckverbindung mittels Befestigungszapfen und korrespondierender Ausnehmung, Nut und Feder usw., werden die Borsten od. dgl. schräg nach hinten gebogen bzw. geneigt und deren freien Enden drücken an die unebene Gegenfläche. Sie dringen dabei in deren Vertiefungen ein und stützen sich zu Beginn der Rückbewegung zumindest an den Seitenflächen der Erhebung ab, wobei deren dichte Anordnung einem Ausweichen der Borsten od. dgl. entgegensteht. Bei Kraftaufwendung kommt es zu einer Verdichtung der schräg gerichteten Borsten od. dgl., die den Auszugswiderstand bewirken. Höherer Kraftaufwand führt schließlich zu einer plötzlichen Richtungsänderung der Borsten od. dgl. mit anschließender Entspannung dank ihrer Elastizität, wobei sie in bezug auf die nunmehrige Bewegungsrichtung dieselbe Schräglage einnehmen, wie bei der Einschubbewegung. Bei der weiteren Rückbewegung ist nun der Ausziehwiderstand gleich dem Einschubwiderstand und daher nur mehr derselbe geringe Kraftaufwand erforderlich. Die elastischen Borsten unterliegen dabei ebenso keinen Veränderungen wie die unebene Gegenfläche, so daß die gelöste Verbindung jederzeit wiederherstellbar ist.

Ist die Verschiebebewegung beidseitig begrenzt, also keine völlige Trennung der beiden Teile gegeben, so sind die elastischen Borsten od. dgl. in eine Schräglage umgebogen. Der hohe Widerstand zu Beginn der Rückbewegung sowie der geringe Widerstand bei der weiteren Rückbewegung ergeben sich wie vorstehend beschrieben, wobei diese Erscheinungen bei jeder Umkehrung der Verschiebebewegung auftreten. Ein vorteilhaftes Anwendungsbeispiel ergibt sich etwa bei Teleskopauszügen, die stufenlos verstellbar sind, und jeweils konträr zur Verschiebeeinrichtung in jeder gewünschten Lage arretieren. Sind mehrere verschieden gerichtete Verschiebebewegungen möglich, so liegt in einer Verschieberichtung ein geringer Widerstand, in allen anderen jedoch ein hoher Widerstand vor, da die Schräglage der Borsten od. dgl. sich in jedem Fall ändern muß. Dieses Phänomen erlaubt es beispielsweise, die erfindungsgemäße Einrichtung an einem Kugelgelenk vorzusehen, das mit Ausnahme einer einzigen Bewegungsrichtung in allen übrigen Bewegungsrichtungen lösbar blockiert ist, und nach Überwindung des Widerstandes in eine beliebige Richtung in dieser Richtung bewegbar ist, während alle übrigen gesperrt sind. Für die Fixierung eines mit der erfindungsgemäßen Einrichtung versehenen Kugelgelenkes ist daher keine Feststelleinrichtung erforderlich. Eine Erhöhung des Umkehrwiderstandes ergibt sich, wenn die Länge der Borsten größer als der Abstand zwischen der mit den elastischen Elementen versehenen Fläche und dem Boden der Vertiefungen der unebenen Gegenfläche ist. Bei dieser Ausführung werden die Borsten od. dgl., die sich zusätzlich am Boden der Vertiefungen abstützen, bei der Rückbewegung zusätzlich längsverformt bzw. gebogen und damit die Verdichtung erhöht.

In einer bevorzugten Ausführung ist schließlich vorgesehen, daß auch an der Gegenfläche sich im wesentlichen davon senkrecht erstreckende, elastische Elemente vorgesehen und durch eine zweite Lage von Borsten od. dgl. gebildet sind, deren freie Enden die Erhebungen und deren Zwischenräume die Vertiefungen der unebenen Gegenfläche bilden.

Nach dieser Ausführung wird der zu überwindende Widerstand bei der Umkehrung der Verschiebebewegung wesentlich erhöht, da beide Lagen von Borsten gleichzeitig ihre Schräglage wechseln müssen. Beim Einschieben legen sich die Borsten entgegengesetzt schräg, so daß sie sich zu Beginn der Rückbewegung ineinander verhaken. Die dadurch auftretende größere Verdichtung und erhöhte Reibung führt zu dem wesentlich erhöhten Widerstand und damit zu einer festeren Verbindung der beiden Teile. Sobald jedoch die Borsten ihre Lage geändert haben und nach der anderen Seite schräg ausgerichtet sind, reduziert sich der Schiebewiderstand bei der Rückbewegung wieder auf das geringe Ausmaß des Widerstandes bei der Hinbewegung.

Zumindest eine Lage von Borsten kann auf einer Trägerfolie, -platte od. dgl. befestigt sein, die ihrerseits wieder an der Fläche bzw. Gegenfläche angeordnet ist. Weiters kann zumindest eine Lage von Borsten durch eine Beschichtung gebildet sein. Bevorzugt ist dabei vorgesehen, daß die Lage von Borsten elektrostatisch aufgeflockt ist.

Da nach dem Verschieben des Gegenstückes bis zum Ineinandergreifen der Borsten bzw. zum Verspreizen der Borsten eine geringfügige, in manchen Fällen ungünstige Rückbewegung möglich ist, nach der erst der Widerstand auftritt, kann weiters vorgesehen sein, daß zwischen einem den maximalen Verschiebeweg des Gegenstückes in der Ausnehmung, Höhlung od. dgl. begrenzenden Anschlag und der Stirnseite des Gegenstückes ein elastischer Körper angeordnet ist, dessen elastische Verformung unter der Kraft der Verschiebung größer ist als die Rückfederung der elastischen Borsten.

Die erfindungsgemäße Einrichtung weist einen sehr weiten Anwendungsbereich auf. Sie kann überall dort eingesetzt werden, wo die Relativbewegung zwischen den beiden Teilen nach beiden Seiten zwar möglich sein soll, jedoch in jedem Umkehrpunkt ein hoher Widerstand zu überwinden ist.

Beispiele für die Anwendung der Einrichtung sind:

1. alle lösbaren Steckverbindungen, mittels Dübelzapfen, Nut und Feder usw.; beispielsweise im Möbelbau, im Ausbau von Gebäuden, bei verstellbaren Trennwänden, Messerständen, Hängedecken, Außen- und Innenverkleidungen, Bilderrahmen;

2. alle lösbaren Verschlüsse an Gebrauchsgegenständen; Kofferverschlüsse, Taschenverschlüsse, Flaschenverschlüsse, Dosenverschlüsse, Füllfederkappen, Kugelschreiberkappen, Abdeckhauben, Gürtelverschlüsse, Riemenverschlüsse, Hosenträgerverschlüsse;

3. lösbare Verbindungen an sonstigen Gegenständen; beispielsweise Verbindungen zwischen Werkzeugen und Handgriff bzw. Stiel, Verbindungen zwischen Spielzeugbausteinen, Verbindungen zwischen den beiden Griffteilen einer Türklinke, Verbindungen an beliebigen Montageteilen, Rohrkupplungen an Schlauchleitungen und starren Leitungen, Rohrkupplungen für Gestelle, Teleskoprohre, beispielsweise für Stative, Schiebehülsen an Regenschirmen, steckbaren Campingmöbel, Zelte usw., Fahrzeuginnenverkleidungen;

4. lösbare Verbindungen bei Drehbewegungen; Gelenkarretierungen, Kugelgelenkarretierungen; zwischen Rahmen und Flügel bei Türen, Möbeltüren, Klappen usw., Schraubenmuttersicherungen;

5. lösbare Verbindungen, bei denen die Einrichtung noch eine weitere Funktion übernimmt, beispielsweise bei elektrischen Installationsteilen mit elektrisch leitenden elastischen Elementen, wie Glühbirnen und Fassungen.

Die Borsten können je nach Anwendungsgebiet hinsichtlich des Materials, der Länge, der Elastizität, der Dichte der Anordnung, des Durchmessers usw. ausgewählt werden.

Nachstehend wird nun die Erfindung an Hand der Figuren der Zeichnungen in einigen Ausführungsbeispielen näher beschrieben, ohne darauf beschränkt zu sein. Die

Fig. 1 bis 3 zeigen verschiedene Möglichkeiten der Flächen- und Gegenflächenausbildung zweier lösbar miteinander zu verbindender Teile, die

Fig. 4 bis 6 eine schematische Darstellung der Anwendung einer Einrichtung bei einer Steckverbindung an Bauteilen entsprechend Fig. 2 oder 3, die

Fig. 7 bis 13 eine schematische Darstellung einer Rohrkupplung, die

Fig. 14 und 15 eine zweite Ausführung einer Steckverbindung entsprechend Fig. 1, und die

Fig. 16 eine vergrößerte Darstellung einer Beschichtung eines Teiles mit elastischen Elementen,

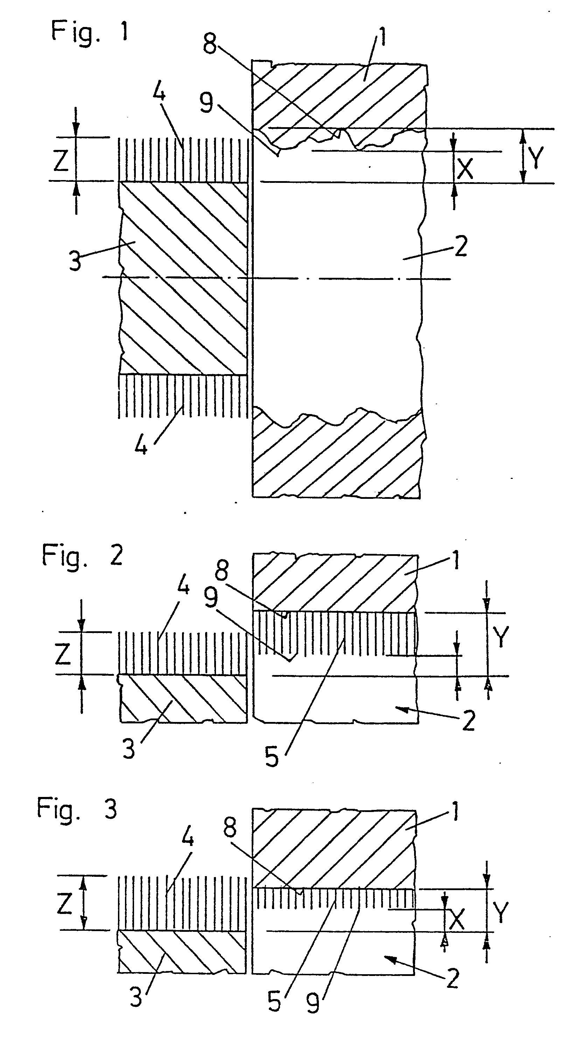

Die erfindungsgemäße Einrichtung kann zur Verbindung von zwei Teilen 1, 3 immer dann herangezogen werden, wenn die beiden Teile 1, 3 Flächen aufweisen, die parallel zur Verschieberichtung verlaufen und aneinander vorbeibewegt werden. Zumindest eine dieser Flächen ist mit einer Lage 4 von Borsten oder ähnlichen elastischen Elementen versehen, die insbesondere elektrostatisch auf den Teil 1, 3 aufgeflockt sind. Auch andere Beschichtungsmöglichkeiten bzw. andere Arten der Borstenbefestigung sind denkbar. Die elastischen Borsten liegen dicht aneinander, so daß sich ein bürstenartiges Aussehen des beschichteten Bereiches ergibt. Von den beiden Teilen 1, 3 weist ein Teil 1 eine Ausnehmung, Vertiefung, Höhlung, einen Kanal, Schlitz, Hohlraum usw. auf, die bzw. der mit 2 bezeichnet ist. Der andere Teil ist ein in diese Ausnehmung od. dgl. 2 einsetz- oder einschiebbares, bzw. darin verschiebbares Gegenstück 3. Das Gegenstück 3 kann ein Vorsprung, Fortsatz od. dgl. eines Gegenstandes sein, kann aber auch etwa bei Nut-Feder-Verbindungen das Verbindungsstück selbst sein, das zwei mit Ausnehmungen od. dgl. 2 versehene Teile 1 verbindet. Vorzugsweise am Gegenstück 3 ist entsprechend Fig. 1 die Lage 4 von Borsten angeordnet, deren Länge Z größer ist als der Abstand X zwischen der die Borsten tragenden Fläche des Gegenstückes 3 und einer gedachten Berührungsfläche der unebenen Gegenfläche des Teiles 1, also der Oberfläche der Ausnehmung od. dgl. 2. Die gedachte Berührungsfläche kann sowohl eben als auch zylindrisch oder kugelig sein, entsprechend der Form der Ausnehmung od. dgl. 2, und berührt Erhebungen 9 der Gegenfläche. Die dazwischenliegenden Vertiefungen sind mit 8 bezeichnet, und deren Boden oder Grund weist den Abstand Y zu der die Borsten tragenden Fläche des Gegenstückes 3 auf.

Beim Einschieben des Gegenstückes 3 in die Ausnehmung 2 werden die Borsten der Lage 4 nach hinten schräg gebogen und rasten in die Vertiefungen 8 der Gegenfläche ein. Der entgegengesetzten Schiebebewegung wird daher ein Widerstand entgegengesetzt, der erst durch höheren Kraftaufwand überwindbar ist und zur Umkehr der Schräglage der Borsten führt. Sobald die umgekehrte Schräglage erreicht ist, entspricht der Widerstand gegen die Rückbewegung wieder dem geringen Widerstand der Einschubbewegung.

In Fig. 2 sind zwei Lagen von elastischen Borsten angeordnet. Dabei entspricht die Ausbildung und Anordnung der Lage 4 am Gegenstück 3 der Ausbildung nach Fig. 1. Die unebene Gegenfläche der Ausnehmung 2 ist jedoch durch eine zweite Lage 5 von elastischen Borsten gebildet, wobei die freien Enden der Borsten den Erhebungen 9 und die Zwischenräume den Vertiefungen 8 der unebenen Gegenfläche nach Fig. 1 entsprechen. Der bei der Umkehr der Schiebebewegung auftretende Widerstand ist jedoch wesentlich erhöht, da die gegenseitig schräg ineinandergreifenden Borsten ineinander verhakt sind und beide Lagen 4, 5 von Borsten zum Richtungswechsel gezwungen werden. Je nach Länge, Elastizität und Dichte der Borsten kann der zu überwindende Widerstand den Gegebenheiten angepaßt sein. Beispielsweise sind in Fig. 3 Borsten dargestellt, deren Länge Z größer als der Abstand Y ist.

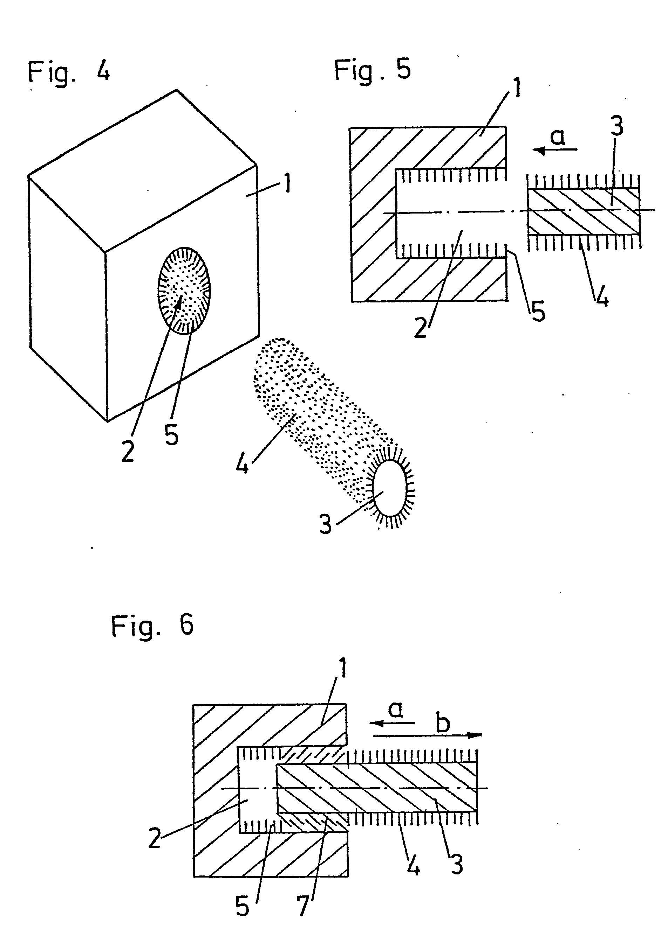

Fig. 4 bis 6 zeigen eine schematische Anwendung bei einer Steckverbindung, etwa Dübelverbindung. Der Dübel bildet das Gegenstück 3, das mit einer Lage 4 von Borsten beflockt ist. Im anderen Teil 1 ist die Seitenwand der Bohrung beflockt. Die beflockten Flächen und Gegenflächen sind daher parallel zur Verschieberichtung. Beim Einschieben des Teiles 3 in den Teil 1 tritt ein geringer Widerstand a auf, da die schräggestellten Borsten aneinander gleiten. Der Widerstand b in Ausziehrichtung ist jedoch solange wesentlich höher, bis die Borsten ihre Richtung geändert haben.

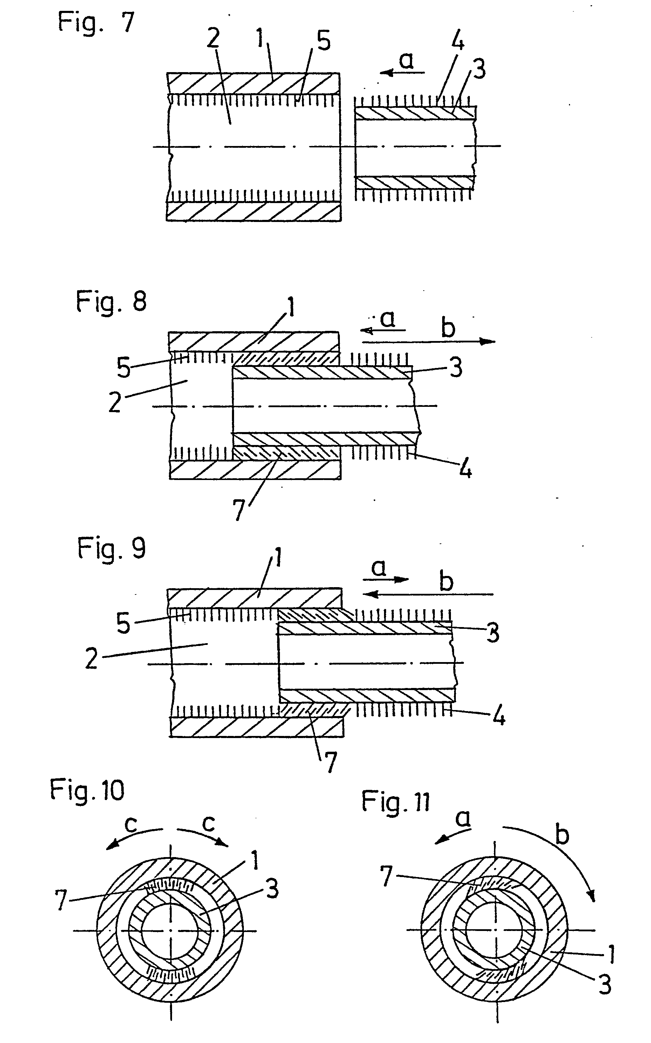

Die Querschnitte des Gegenstückes 3 und der Ausnehmung 2 können beliebig ausgebildet sein. Runde Querschnitte ergeben einen weiteren interessanten Effekt, der an Hand der Fig. 7 bis 13 erläutert wird. Diese zeigen eine Verbindung zweier Rohre, die mit Lagen 4, 5 von elastischen Borsten versehene Flächen aufweisen. Beim Ineinanderschieben der Rohre werden die Borsten schräg gestellt und gleiten aneinander. Der Schiebewiderstand a ist gering, hingegen der Widerstand b der Rückbewegung groß. Die Rohre sind daher ineinander beliebig tief verschiebbar und in jeder Stellung liegt ein hoher Widerstand b der Borsten im Eingriffsbereich 7 vor. Soll nun das weitere Einschieben des Rohres bzw. Teiles 3 in das Rohr bzw. den Teil 1 vermieden werden, ist nur eine Umkehr der Borsten im Eingriffsbereich 7 erforderlich. Wie aus Fig. 9 ersichtlich, tritt nun der Widerstand b gegen die Einschiebebewegung, jedoch nur der kleine Widerstand a gegen die Rückbewegung auf, in der die Borsten aneinander gleiten. Für die Umkehr der Borsten, und damit für den Richtungswechsel des Schiebewiderstandes ist ausschließlich dessen Überwindung erforderlich, die den Schräglagenwechsel der Borsten bewirkt.

Bei sehr großem Eingriffsbereich 7 kann nun die Überwindung des Widerstandes durch Richtungsumkehr hohe, gegebenenfalls nicht einsetzbare Kraft erfordern. Da jedoch runde Querschnitte vorliegen, können die Rohre gegeneinander verdreht werden. Fig. 10 zeigt einen Querschnitt entsprechend einer Stellung nach Fig. 8. Daraus ist auch ersichtlich, daß sich die Lagen 4, 5 nicht über die gesamten zueinander weisenden Oberflächen der Teile 1 und 3 erstrecken müssen. Die Lagen 4, 5 können auch nur in gewissen Abschnitten vorgesehen werden. Aus der Stellung nach Fig. 8 ist in den beiden Drehrichtungen ein gleich großer Widerstand c zu überwinden. Dieser Widerstand c ist selbstverständlich größer als der Gleitwiderstand a in der Schieberichtung, jedoch kleiner als der Widerstand b in entgegengesetzter Richtung. Dies ist dadurch erklärlich, daß der Winkel, um den die schräggestellten Borsten jeder Lage 4, 5 sich drehen müssen, beim Übergang von der Schiebebewegung zur Drehung wesentlich kleiner ist als bei der Umkehr der Schieberichtung.

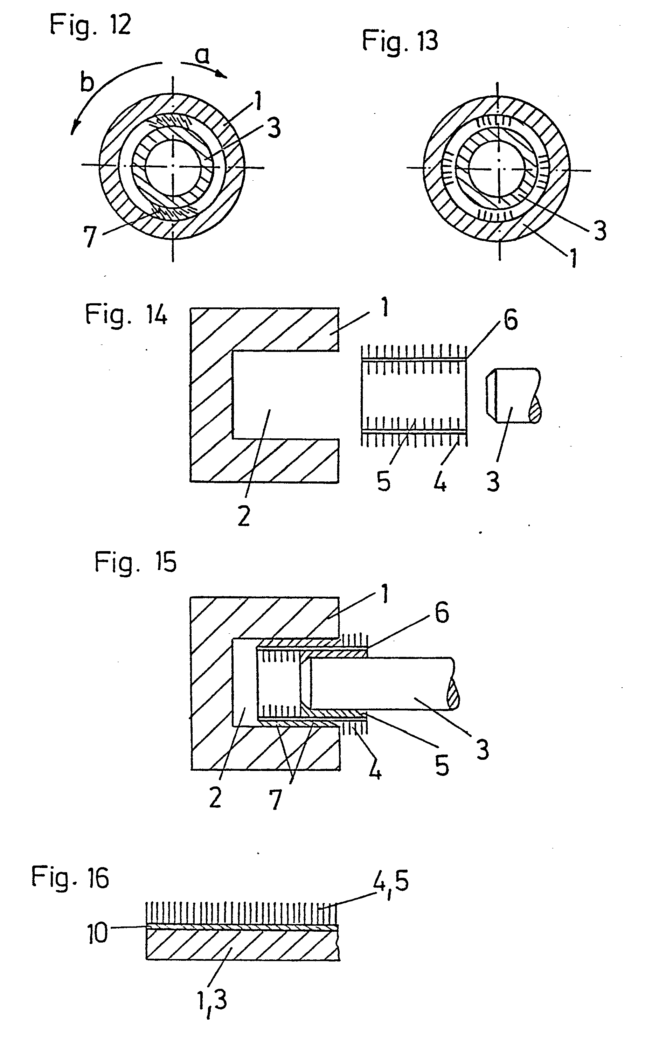

Sobald der Übergang von der Schiebebewegung zur Drehung stattgefunden hat, also der Widerstand c überwunden wurde, liegen nun in den beiden Drehrichtungen wechselweise die Widerstände a und b vor, d. h. bei der weiteren Drehung des inneren Teiles 3 gleiten die Borsten aneinander. In der Drehrichtung des inneren Teiles 3 ergibt sich der Widerstand a, entgegengesetzt der Widerstand b. Nach Überwindung des Widerstandes b durch Umkehr der Drehrichtung des inneren Teiles 3 liegt auch der Wechsel der Widerstände a, b vor (Fig. 12). Soll nun aus der in Fig. 11 oder 12 gezeigten Stellung, also nach Verdrehen der beiden Rohre, diese wieder entlang ihrer Achsen verschoben werden, so ist beim Einleiten der Verschiebebewegung nach beiden Seiten der Widerstand c zu überwinden, da zwar eine Bewegungsrichtungsänderung, jedoch keine Umkehr vorliegt. Sollen die Rohre weiter ineinandergeschoben werden, ändern sich die Borsten in die Stellung nach Fig. 8, sollen sie auseinandergeschoben werden, ändern sie sich in die Stellung nach Fig. 9.

Daraus ergibt sich, daß die Bewegungsumkehr mit verringertem momentanen Kraftaufwand erzielt werden kann, wenn zwischen der Einschiebebewegung und der Ausschiebebewegung eine geringfügige Verdrehung der beiden Teile vorgenommen wird. Sind die Eingriffsbereiche 7 nur über einen Teil des Umfanges vorgesehen, kann nach Fig. 13 eine Drehung um 90° die Lagen von Borsten voneinander trennen, wodurch zu deren Längsverschiebung auch der Widerstand a ausgeschaltet werden kann. Eine Vierteldrehung bringt die Borsten in die Stellungen von Fig. 11 oder 12, womit die Verbindung erfolgt ist.

Die erfindungsgemäße Einrichtung eignet sich daher vorzüglich auch für die beliebige Arretierung von Kugelgelenken, da nur nach einer Richtung ein kleiner Widerstand a bei der Bewegung vorliegt, dieser Widerstand wächst mit dem Winkel der Bewegungsrichtung zur ursprünglichen Richtung und erreicht sein Höchstmaß bei Umkehr der Bewegungsrichtung. Dieses Höchstmaß des Widerstandes kann aber in jeder Richtung erzeugt werden, wenn die Teile in die entgegengesetzte Richtung solange bewegt werden, bis die Ausrichtung der Borsten sich vollzogen hat.

Fig. 14 und 15 zeigen ein Ausführungsbeispiel entsprechend der Darstellung von Fig. 1. Die Ausnehmung 2 und das Gegenstück 3 sind mit unebenen Gegenflächen versehen, und jeder Gegenfläche ist eine Lage 4, 5 von Borsten zugeordnet, die an einem hülsenartigen Zwischenstück in entgegengesetzte Richtungen weisend ausgebildet sind. Beim Einschieben werden die Borsten der beiden Lagen 4, 5 ebenfalls wieder entgegengesetzt umgebogen und verhaken sich an den Gegenflächen unter Bildung zweier Verzahnungen 7. Das Zwischenstück 6 kann aus Metall oder Kunststoff bestehen.

Fig. 16 zeigt vergrößert einen mit einer Lage 4, 5 von Borsten versehenen Bereich. Die Borsten sind bevorzugt elektrostatisch auf eine Klebstoffschicht 10 aufgeflockt, mit denen der Teil 1, 3 überzogen ist. Es wäre auch denkbar, die Borsten auf einer Trägerfolie anzuordnen und diese auf die Flächen bzw. Gegenflächen oder Teilen davon aufzukleben.

Bei Ausführungsbeispielen mit ausschließlich linearer Verschiebbarkeit kann in jedem Umkehrpunkt ein geringer Rückfederungseffekt bis zum Eingriff der schräggestellten Borsten an der Gegenfläche durch einen elastischen Körper ausgeschaltet werden, der als Anschlag am Ende der Ausnehmung 2 angeordnet ist.

Neben der eigentlichen Aufgabe der lösbaren Verbindung können die Lagen 4, 5 von Bosten auch andere Funktionen übernehmen. So können sie auch bei Abdichtung von Rohrkupplungen zumindest bei geringem Druck des strömenden Mediums bewirken. Sie können weiters aus einem Metall bestehen und als elektrisch leitende Teile wirken, beispielsweise bei Glühlampen und -fassungen, bei denen die Verbindung bereits das Gewinde ersetzt, oder sie können aus einem magnetisierbaren Material bestehen.

## Patentansprüche

1. Einrichtung zur lösbaren Verbindung eines ersten Teiles (1), der eine Ausnehmung, Höhlung od. dgl. (2) aufweist, und eines in die Ausnehmung, Höhlung od. dgl. einschiebbaren oder darin bewegbaren zweiten Teiles (3), wobei im wesentlichen senkrecht zur Bewegungsrichtung sich erstreckende elastische Elemente an zumindest einem Teil der inneren Oberfläche des ersten Teiles und/oder der äußeren Oberfläche des zweiten Teiles angeordnet sind, und wobei die Länge der elastischen Elemente größer als der Abstand zwischen der mit den elastischen Elementen versehenen Fläche und der Gegenfläche am jeweils anderen Teil ist, dadurch gekennzeichnet, daß die elastischen Elemente als eine Lage (4) von nahe nebeneinander angeordneten Borsten od. dgl. ausgebildet sind und die Gegenfläche des jeweils anderen Teils uneben ausgebildet ist, so daß sie Vertiefungen (8) und Erhöhungen (9) aufweist.

2. Einrichtung nach Anspruch 1, dadurch gekennzeichnet, daß die Erhöhungen (9) von den Enden elastischer Elemente gebildet werden, die in einer Lage (5) von nahe nebeneinanderliegenden Borsten od. dgl. auf der die Vertiefungen (8) bildenden Gegenfläche des jeweils anderen Teils angeordnet sind.

3. Einrichtung nach Anspruch 1 oder 2, dadurch gekennzeichnet, daß zumindest eine Lage der elastischen Elemente auf einer Klebstoffschicht (10), Trägerfolie, -platte od. dgl aufgebracht ist, die ihrerseits auf der Oberfläche des ersten und/oder des zweiten Teiles befestigt ist.

4. Einrichtung nach Anspruch 3, dadurch gekennzeichnet, daß zumindest ein Teil der elastischen Elemente elektrostatisch aufgeflockt ist.

5. Einrichtung nach einem der Ansprüche 1 bis 4, dadurch gekennzeichnet, daß zwischen dem ersten und dem zweiten Teil ein hülsenförmiges Zwischenstück (6) angeordnet ist, und daß zumindest ein Teil zumindest einer der nunmehr vier gebildeten Oberflächen mit einer Lage der elastischen Elemente versehen ist.

6. Einrichtung nach einem der Ansprüche 1 bis 5, dadurch gekennzeichnet, daß die elastischen Elemente aus magnetisierbarem Material bestehen und die eine Lage gegenüber der anderen unterschiedlich gepolt magnetisiert ist.

7. Einrichtung nach einem der Ansprüche 1 bis 6, dadurch gekennzeichnet, daß zwischen einem den maximalen Verschiebeweg des zweiten Teiles in der Ausnehmung, Höhlung od. dgl. des ersten Teiles begrenzenden Anschlag und der Stirnseite des zweiten Teiles ein elastischer Körper angeordnet ist, dessen elastische Verformung unter der Kraft der Verschiebung größer ist als die Rückfederung der elastischen Elemente.

## Claims

1. A device for releasable connection of a first part (1) which has a recess, hollow or similar (2) and of a second part (3) insertable into the recess, hollow or similar and movable therein, elastic elements, extending substantially perpendicularly to the direction of movement, being provided on at least one portion of the inner surface of the first part and/or the outer surface of the second part, the length of the elastic elements being greater than the distance between the surface provided with the elastic elements and the opposite surface of the other part, characterised in that the elastic elements are formed as a layer (4) of bristles or similar situated close to each other, and the opposite surface of the other part is made uneven so that it has depressions (8) and raised portions (9).

2. A device according to claim 1, characterised in that the raised portions (9) are formed by the ends of elastic elements which are arranged in one layer (5) of bristles or similar situated close to each other on the opposite surface, forming depressions (8), of the other part.

3. A device according to claim 1 or 2, characterised in that at least one layer of the elastic elements is positioned on a layer (10) of adhesive, carrier foil, carrier plate or similar, which is fixed on the surface of the first and/or the second part.

4. A device according to claim 3, characterised in that at least part of the elastic elements is applied by electrostatic flocking.

5. A device according to any one of claims 1 to 4, characterised in that between the first and the second part is situated a sleeve-shaped intermediate element (6), and that at least a portion of at least one of the four formed surfaces is provided with a layer of elastic elements.

6. A device according to any one of claims 1 to 5, characterised in that the elastic elements are made of a magnetisable material and one said layer is magnetised with a different polarity than the other.

7. A device according to any one of claims 1 to 6, characterised in that between one stop limiting the maximum displacement path of the second element in the recess, hollow or similar of the first element and the end face of the second part is situated an elastic body, the elastic deformation of which by the force of the displacement is greater than the springback of the elastic elements.

## Revendications

1. Dispositif de liaison amovible d'une première pièce (1) comprenant un évidement, une cavité ou analogue (2), et d'une seconde pièce (3) pouvant être enfoncée ou se déplacer à l'intérieur de l'évidement, de la cavité ou analogue, des éléments élastiques qui s'étendent sensiblement perpendiculairement à la direction du mouvement étant disposés sur au moins une partie de la surface intérieure de la première pièce et/ou sur la surface extérieure de la seconde pièce, et la longueur des éléments élastiques étant supérieure à la distance séparant la surface garnie d'éléments élastiques et la contre-surface de l'autre pièce, caractérisé en ce que les éléments élastiques sont constitués par une chouche (4) de poils ou analogues disposés étroitement les uns contre les autres et en ce que la contre-surface de l'autre pièce est de constitution inégale de manière à présenter des enfoncements (8) et des parties en saillie (9).

2. Dispositif selon la revendication 1, caractérisé en ce que les parties en saillie (9) sont constituées par les extrémités d'éléments élastiques qui sont disposés en formant une couche (5) de poils ou analogues disposés étroitement les uns contre les autres sur la contre-surface de l'autre pièce qui forme les parties enfoncées (8).

3. Dispositif selon la revendication 2, caractérisé en ce qu'au moins une chouche d'éléments élastiques est déposée sur une couche de colle (10), une feuille de support, une plaque de support ou analogue, qui de son côté est fixée à la surface de la primère et/ou de la seconde pièce.

4. Dispositif selon la revendication 3, caractérisé en ce qu'une partie au moins des éléments élastiques est déposée par flocage électrostatique.

5. Dispositif selon l'une quelconque des revendications 1 à 4, caractérisé en ce qu'on dispose une pièce intermédiaire (6) en forme de douille entre la première et la seconde pièce, et en ce qu'au moins une partie d'au moins l'une des quatre surfaces ainsi constituées est munie d'une couche d'éléments élastiques.

6. Dispositif selon l'une quelconque des revendications 1 à 5, caractérisé en ce que les éléments élastiques sont constitués en un matériau magnétisable et en ce qu'une couche est magnétisée selon une polarité contraire à celle de l'autre.

7. Dispositif selon l'une quelconque des revendications 1 à 6, caractérisé en ce qu'un corps élastique est disposé entre une butée limitatrice de la distance maximale pouvant être parcourue par la seconde pièce dans l'évidement, la cavité ou analogue de la première pièce et le côté frontal de la seconde pièce, corp élastique dont la déformation élastique provoquée par la force du déplacement est supérieure à la détente des éléments élastiques.

Fig. 1

Fig. 2

Fig. 3

Fig. 4

Fig. 5

Fig. 6

0 045 767

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**